# EUROPEAN PATENT SPECIFICATION

(11) **EP 3 198 521 B1**
(45) Date of publication and mention of the grant of the patent: **09.11.2022**
(21) Application number: 15843785.5
(22) Date of filing: 21.09.2015
(51) Int. Cl.: G06K 7/14, G06F 3/03, H04L 67/55, G06F 3/0484, G06F 16/955, H04L 67/565, H04L 51/18

(54) **METHOD AND APPARATUS OF PROCESSING A DOI (DIGITAL OBJECT UNIQUE IDENTIFIER) IN INTERACTION INFORMATION**
VERFAHREN UND VORRICHTUNG ZUR VERARBEITUNG EINES DOI (EINDEUTIGER IDENTIFIKATOR EINES DIGITALEN OBJEKTS) IN INTERAKTIONSINFORMATIONEN
PROCÉDÉ ET APPAREIL DE TRAITEMENT DE DOI (IDENTIFICATEUR UNIQUE D'OBJET NUMÉRIQUE) DANS DES INFORMATIONS D'INTERACTION

(30) Priority: 22.09.2014 CN 201410487306
(43) Date of publication of application: 02.08.2017
(73) Proprietor: Advanced New Technologies Co., Ltd., George Town, Grand Cayman KY1-9008 (KY)
(72) Inventor: WANG, Bicai, Hangzhou 311121 (CN); ZHANG, Xiang, Hangzhou 311121 (CN)
(74) Representative: Barker Brettell LLP
(86) International application number: PCT/US2015/051257
(87) International publication number: WO 2016/048907

(56) References cited:
- EP-A2- 2 709 384
- WO-A2-2014/123954
- US-A1- 2013 043 302
- US-A1- 2013 320 100
- Anonymous: "Digital object identifier - Wikipedia", , 8 September 2014 (2014-09-08), XP055671116, Retrieved from the Internet: URL:https://en.wikipedia.org/w/index.php?t itle=Digital_object_identifier&oldid=62461 0502 [retrieved on 2020-02-24]

## Description

### Technical Field

The present disclosure relates to the field of computer and Internet technologies, and in particular, to methods and apparatuses of processing a DOI (Digital Object Unique Identifier) in interaction information.

### Background

In an information age having a rapid development of science and technology, interaction of information occurs frequently, and interaction information may include a large amount of textual information, image information, link information or audio/video information. In particular, a Digital Object Unique Identifier (DOI) may also exist in the interaction information. As an "identification card" number in a digital age, the DOI mainly includes types such as a two-dimensional code (also known as R code), a bar code, a character code, a network domain name, etc.

Information interaction in Instant Messaging (IM for abbreviation) is used as an example. A client end A receives a two-dimensional code image sent from a client end B. In order to obtain information identified by a two-dimensional code in a two-dimensional code image, a user of the client end A needs to store the two-dimensional code image received by the client end A locally, exit from an IM interface, open a two-dimensional code scanning software, and load the two-dimensional code image that has been locally stored into the two-dimensional code scanning software. After the two-dimensional code scanning software completes an analysis of the two-dimensional code image, the users may read the information identified by the two-dimensional code from an interface of the two-dimensional code scanning software.

Deficiencies exist in the above existing technologies. In order to obtain information identified by a two-dimensional code in interaction information, a user needs to perform multiple operations, which results in relatively tedious operations and low efficiency of operations.

Similarly, the aforementioned technical problem still exists if the user wants to acquire other types of information identified by the DOI, such as a bar code, which is included in the interaction information.

EP 2709384 (A2) discloses a method and system for transmitting information which is obtained from a peripheral object when an interactive service between devices is performed, and a device. The information transmission method includes: obtaining first information which is stored in a peripheral object of an electronic device via short distance communication with the peripheral object when an interactive service is performed between the electronic device and the at least one external device; generating second information that is to be transmitted to the at least one external device based on the obtained first information; and transmitting the second information to the at least one external device via the interactive service.

WO2014/123954 A2 relates to a system for providing additional object information to a client, by sending a picture taken by the client, possibly including a QR code, to a server and receiving the additional information for display.

### Summary

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to device(s), system(s), method(s) and/or computer-readable instructions as permitted by the context above and throughout the present disclosure.

Embodiments of the present disclosure provide a method of processing a DOI in interaction information to improve the efficiency of obtaining information identified by the DOI for a user. The embodiments of the present disclosure further provide an apparatus of processing a DOI in interaction information to improve the efficiency of obtaining information identified by the DOI for a user.

The embodiments of the present disclosure employ technical solutions as follows. A method of communication between a sending client end and a receiving client end implemented by a server using a DOI, as claimed in Claim 1.

One or more computer-readable media storing executable instructions that, when executed by one or more processors of a server, cause the one or more processors to perform acts as specified in Claim 6.

A server as specified in Claim 10.

From the technical solutions of the embodiments of the present disclosure, a user is able to acquire information identified by a DOI in interaction information without performing tedious operations during an interaction of information, and thus user efficiency of obtaining the information that is identified by the DOI is greatly increased as compared to the existing technologies.

### Brief Description of the Drawings

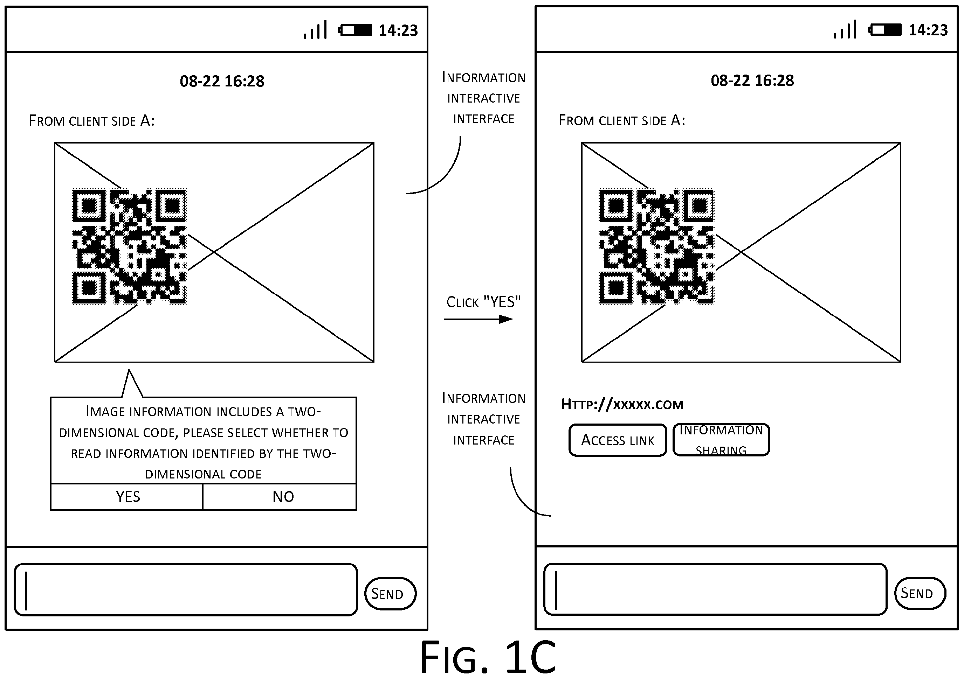

The accompanying drawings described herein are provided for further comprehension of the present disclosure, and constitute a part of the present disclosure. Exemplary embodiments of the present disclosure and a description thereof are used to illustrate the present disclosure, and do not constitute any limitation to the present disclosure, which is limited only by the claims. In the accompanying drawings:

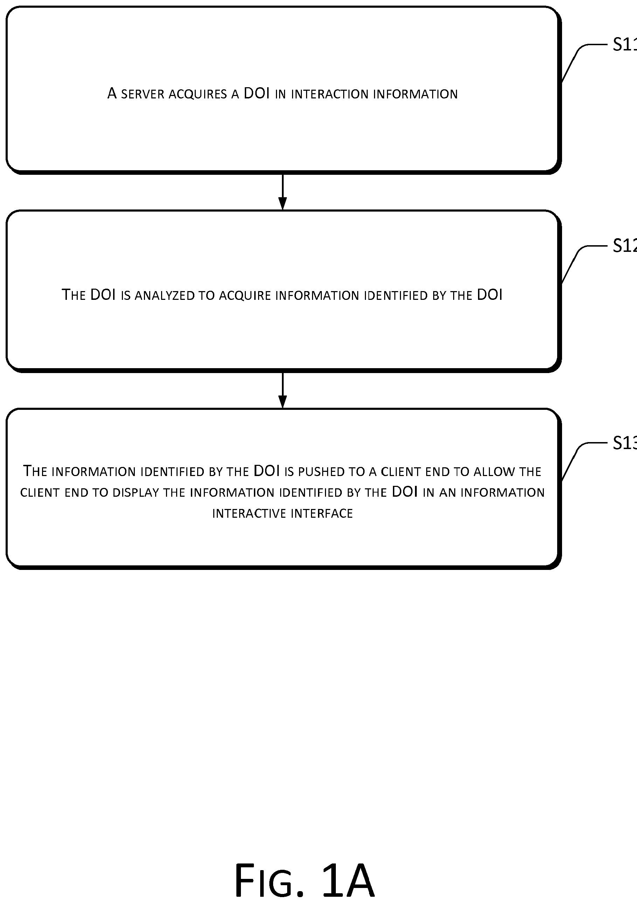

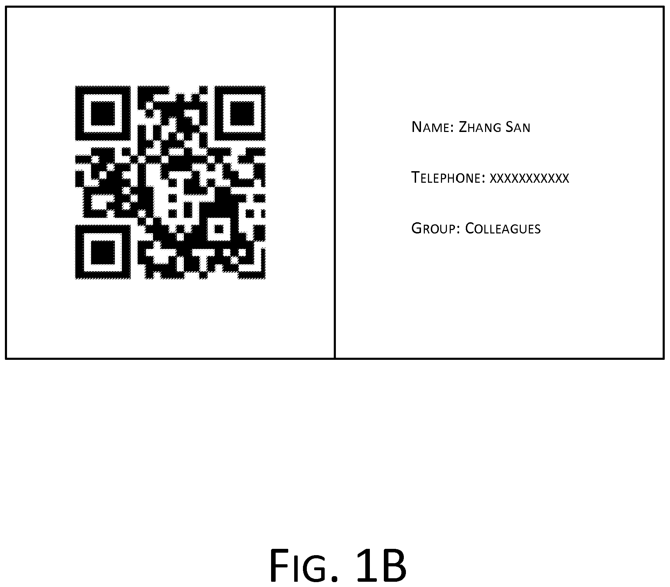

FIG. 1A is a flowchart illustrating an example method of processing a DOI in interaction information in accordance with the embodiments of the present disclosure.
FIG. IB is a schematic diagram illustrating a name card image including a two-dimensional code in accordance with the embodiments of the present disclosure. FIG. 1C is a schematic diagram illustrating a change in state of information identified by a two-dimensional code displayed in an information interactive interface in accordance with the embodiments of the present disclosure.
FIG. 2 is a flowchart illustrating another example method of processing a DOI in interaction information in accordance with the embodiments of the present disclosure.
FIG. 3 is a flowchart illustrating another example method of processing a DOI in interaction information in accordance with the embodiments of the present disclosure.
FIG. 4 is a structural diagram illustrating an apparatus of processing a DOI in interaction information in accordance with the embodiments of the present disclosure.
FIG. 5 is a structural diagram illustrating another apparatus of processing a DOI in interaction information in accordance with the embodiments of the present disclosure.

### Detailed Description

In order to make objectives, technical solutions, and advantages of embodiments of the present disclosure more comprehensible, technical solutions of the present disclosure are clearly and fully described hereinafter with reference to exemplary embodiments and corresponding accompanying drawings of the present disclosure. Apparently, the described embodiments represent merely a part of and not all of the embodiments of the present disclosure. All other embodiments acquired by one of ordinary skill in the art based on the embodiments of the present disclosure without making any creative effort shall belong to the scope of protection of the present disclosure.

The technical solutions provided by the embodiments of the present disclosure are described in detail herein with reference to the accompanying drawings.

The embodiments provide a method of processing a DOI in interaction information. An example flowchart of the method is shown in FIG. 1A, which includes the following method blocks.

At S11, a server acquires a DOI in interaction information.

At S12, the DOI is analyzed to acquire information identified by the DOI.

At S13, the information identified by the DOI is pushed to a client end to allow the client end to display the information identified by the DOI in an information interactive interface. At S11, no limitation is imposed on a type of the interaction information. For example, the interaction information may be interaction information in instant messaging (e.g., 00, WeChat, Fetion, IP Messenger, MSN Messenger, Baidu HI, Sina UC, etc.), interaction information in a social networking platform (e.g., MicroBlog, Twitter, Facebook, Tianya Club, etc.), interaction information in an electronic mail, etc. The interaction information includes a DOI, and may further include textual information, image information, link information, audio/video information, etc. As a digital object unique identifier, the DOI possesses uniqueness, and thus information uniquely identified by the DOI is able to be obtained based on a corresponding analysis rule. No limitation is imposed on a type of the DOI, which may be a two-dimensional code, a bar code, a character code, a network domain name, etc., for example.

At S 12, an implementation of analyzing the DOI to acquire information identified by the DOI is achieved in the following mode: a DOI coding and decoding processor is integrated in the server, and correspondingly identified information may be parsed from the DOI according to a DOI logic coding and decoding rule.

At S13, the information identified by the DOI is pushed to a receiving client end (i.e., a client end that receives the interaction information) and to the sending client end.

In an implementation, S11 includes obtaining the DOI in the interaction information that is sent by a sending client end. At S13, the information identified by the DOI may be pushed to the receiving client end of the receiver and the sending client end of the sender at the same time.

In an implementation, S13 may include pushing interaction information that includes the information identified by the DOI to the client end. It can be understood that either the interaction information that includes both the DOI and the information identified by the DOI or the interaction information that only includes the information identified by the DOI can be pushed to the client end. In this way, when the server sends interaction information sent by a sending client end to a receiving client end, the server may send information identified by a parsed DOI in interaction information, together with the interaction information to the receiving client end, so that the receiving client end of the receiver may acquire the information identified by the DOI in the interaction information directly.

In an implementation, S11 includes the following method sub-blocks:
obtaining image information in the interaction information; and
determining whether the image information includes the DOI, and extracting the DOI from the image information if affirmative.

Image information may include a DOI, and may also include information other than the DOI. This implementation is able to automatically identify image information that includes a DOI and extract the DOI therefrom. As shown in FIG. IB, an image includes text content in addition to a two-dimensional code that identifies a company website. Using the foregoing method sub-blocks, a name card image that includes the two-dimensional code is automatically identified, from which the two-dimensional code is extracted.

In an implementation, the DOI in the interaction information may also be embodied in a form other than an image, for example, a two-dimensional code pattern presented by an arrangement of multiple "■" symbols and spaces according to a certain rule.

In an implementation, S13 may include pushing a display operation entry for the information identified by the DOI to the client end; and pushing the information identified by the DOI to the client end in response to receiving a display trigger instruction for the information identified by the DOI from the client end, where the display trigger instruction is triggered by a user operation on the display operation entry.

The display operation entry is an operation entry for a user to select whether to display the information identified by the DOI, and may include a window, a button, etc. As shown by the left-side view in FIG. 1C, when a client end B receives image information including a two-dimensional code that is sent by a client end A through the server, a prompt window may show up below the image information to indicate to a user that the image information includes a two-dimensional code, and ask the user whether to read information identified by the two-dimensional code. If the user clicks on a "YES" button, the prompt window is closed, and the information identified by the two-dimensional code is displayed in the information interactive interface, as shown by the right-side view in FIG. 1C. If the user clicks on a "NO" button in the left-side view of FIG. 1C, the prompt window is closed, and the information identified by the two-dimensional code will not be displayed in the information interactive interface.

In the foregoing implementation, a user is able to select whether to read the information identified by the DOI based on his/her needs. When reading the information identified by the DOI is not desired, the information identified by the DOI will not be displayed in the information interactive interface, thus reducing loading of data to save network traffic resources of a mobile terminal. On the other hand, if the information identified by the DOI is not a secure website link, this solution is able to reduce a potential risk and loss due to an automatic link to an unsecure website for the user.

In another implementation, if the information identified by the DOI is detected in advance to be safe information, the display operation entry for the information identified by the DOI may be not pushed to the client end. Instead, the information identified by the DOI may be pushed to the client end directly.

In an implementation, the DOI processing method may further include pushing an operation entry for the information identified by the DOI to the client end.

As shown by the right-side view of FIG. 1C, the operation entry for the information identified by the two-dimensional code includes an operation entry for link access (i.e., an "Access link" button) and an operation entry for sharing information (i.e., an "Information sharing" button) when the information identified by the two-dimensional code is a website link. In addition, the operation entry for the information identified by the DOI may also be an operation entry for copying information, an operation entry for collecting information, an operation entry for forwarding information, etc. The operation entry for the information identified by the DOI may include a window, a button, etc.

From the technical solutions of the foregoing embodiments, a user is able to acquire information identified by a DOI in interaction information without performing complicated operations during information interaction. Therefore, these solutions greatly improve the efficiency of acquiring the information identified by the DOI for the user as compared to the existing technologies.

It should be noted that an entity that performs the method blocks of the method provided in the embodiments is a server.

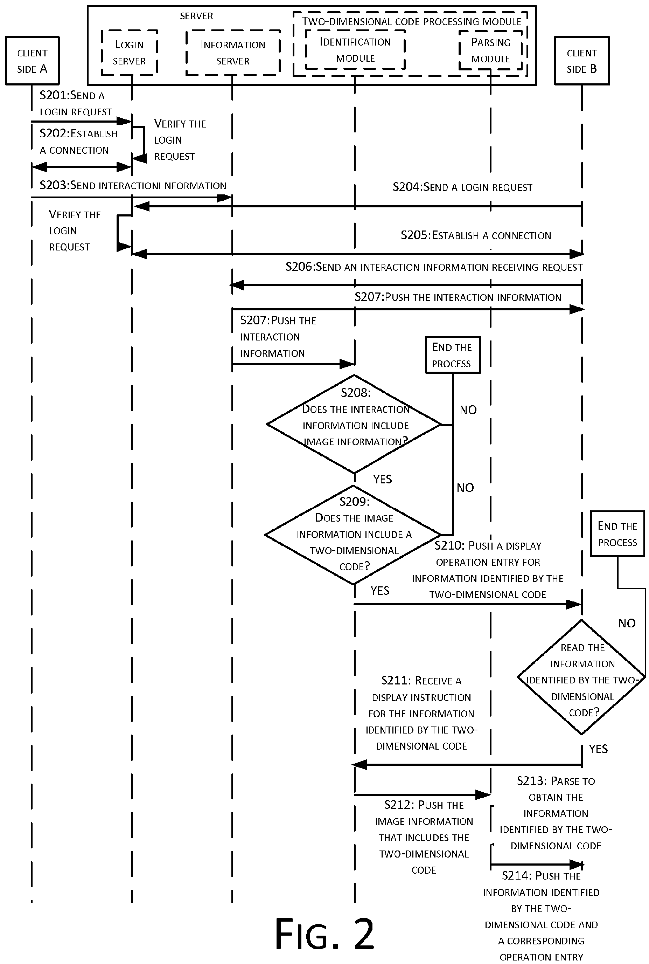

The embodiments provide another method of processing a DOI in interaction information. This method is applicable in instant messaging, and the DOI is a two-dimensional code. A server is divided into a login server, an information server and a two-dimensional code processing module. The two-dimensional code processing module may include an identification module and a scanning module. With reference to FIG. 2, an exemplary process of the method includes method blocks as follows.

At S201, the login server receives a login request sent by a client end A.

At S202, the login server establishes a connection with the client end A upon verifying the login request of the client end A.

At S203, the information server receives and stores interaction information sent by the client end A, where the interaction information includes textual information and image information, and the image information includes a two-dimensional code.

At S204, the login server receives a login request sent by a client end B.

At S205, the login server establishes a connection with the client end B upon verifying the login request of the client end B.

At S206, the information server receives an interaction information receiving request from the client end B.

At S207, the information server pushes the interaction information to the client end B and the identification module.

At S208, the identification module determines whether the interaction information includes image information. S209 is performed if affirmative. Otherwise, the process is ended.

At S209, the identification module determines whether the image information includes a two-dimensional code. S210 is performed if affirmative. Otherwise, the process is ended. At S210, the identification module pushes a display operation entry for information identified by the two-dimensional code to the client end B to ask a user of the client end B whether to read the information identified by the two-dimensional code.

At S211, the identification module receives a display instruction for the information identified by the two-dimensional code from the client end B.

At S212, the identification module pushes the image information that includes the two-dimensional code to the scanning module.

At S213, the scanning module scans and parses the image information that includes the two-dimensional code according to a defined parsing rule to acquire the information identified by the two-dimensional code.

At S214, the scanning module pushes the information identified by the two-dimensional code and an operation entry for the information identified by the two-dimensional code to the client end B and to the client end A.

After S214, the user of the B client end is able to acquire the information identified by the two-dimensional code from an information interactive interface of instant messaging, and may perform a related operation on the information identified by the two-dimensional code via a corresponding operation entry, e.g., copying the information identified by the two-dimensional code by clicking on a "Copy" button, or accessing a webpage of a website link by clicking on an "Access link" button if the information identified by the two-dimensional code includes the website link.

At S210, the identification module may also push a display operation entry for the information identified by the two-dimensional code to the client end A at the same time to ask a user of the client end A whether to read the information identified by the two-dimensional code. Correspondingly, the scanning module pushes the information identified by the two-dimensional code and the operation entry for the information identified by the two-dimensional code to the client end A at the same time at S214. In this way, the user of the client end A is also able to selectively view the information identified by the two-dimensional code in the image information that has been sent, thus having a very convenient operation. In the embodiments of the present disclosure, interaction(s) between the client end A and the client end B may be different from the above method blocks. For example, when the client end A sends interaction information to the client end B, the client end A may directly send the interaction information to the server. The server may parse the two-dimensional code from the interaction information to acquire information identified thereby, and include the two-dimensional code in interaction information that is directly forwarded to the client end B. No limitation is imposed on any similar implementations, as long as the server is able to parse a DOI included in interaction information and provide information identified to a client end after parsing in a convenient manner.

For interaction(s) of information in a social networking platform or via electronic mails, a process of processing a DOI is similar to the foregoing process, and is not repeatedly described in detail herein.

As can be seen from the foregoing process, a user is able to acquire information identified by a two-dimensional code in interaction information without performing tedious operations during information interaction. Thus, this solution greatly increases the user efficiency of obtaining the information that is identified by the two-dimensional code as compared to the existing technologies.

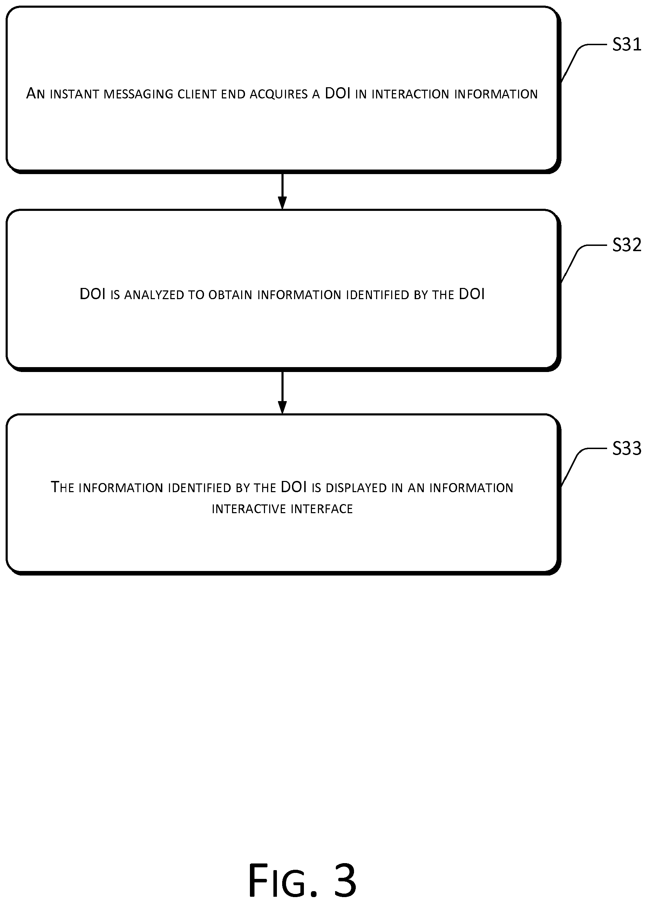

The embodiments further provide another method of processing a DOI in interaction information. An exemplary flowchart of this method is shown in FIG. 3, which includes method blocks as follows.

At S31, an instant messaging client end acquires a DOI in interaction information.

At S32, DOI is analyzed to obtain information identified by the DOI.

At S33, the information identified by the DOI is displayed in an information interactive interface.

Unlike the forgoing embodiments, the method blocks in this embodiment are performed by an IM client end, which may be a sending client end or a receiving client end. A DOI coding and decoding processor may be integrated in the IM client end, and the DOI coding and decoding processor may parse correspondingly identified information from the DOI as according to a DOI logic coding and decoding rule. In addition, the IM client end may also access a server which is integrated with a DOI coding and decoding processor, and parse the DOI through the server to acquire information correspondingly identified by the DOI. I n an implementation, S31 may include method sub-blocks as follows:
obtaining image information in the interaction information; and
determining whether the image information includes the DOI, and extracting the DOI from the image information if affirmative.

In an implementation, S33 may include pushing a display operation entry for the information identified by the DOI to the information interactive interface; and displaying the information identified by the DOI in the information interactive interface in response to receiving a display trigger instruction for the information identified by the DOI, where the display trigger instruction is triggered by a user operation on the display operation entry.

In an implementation, the DOI processing method may further include displaying an operation entry for the information identified by the DOI in the information interactive interface.

By the same token, a user is able to obtain information identified by a DOI in interaction information without performing complicated operations in information interaction, thus having a relatively high efficiency.

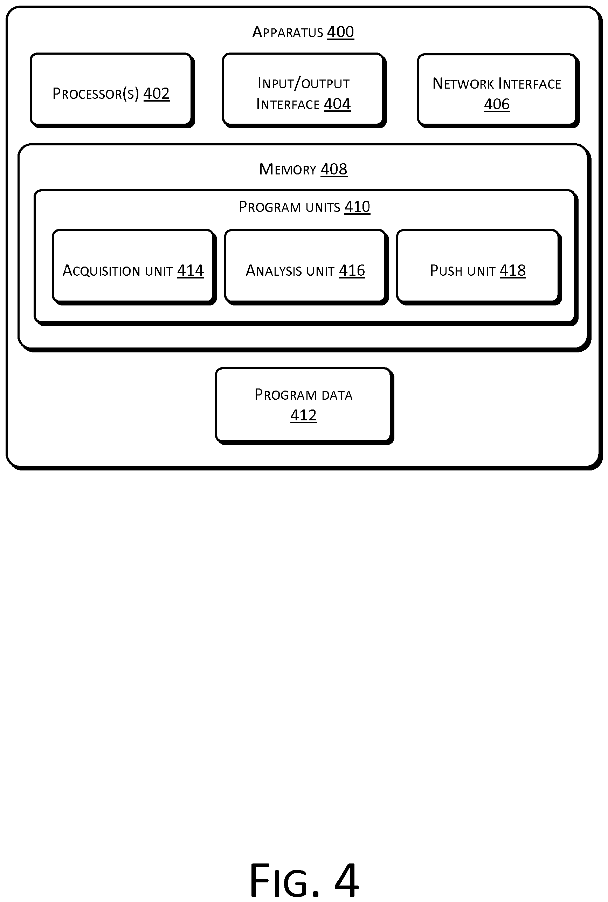

Based on the same inventive concepts, the embodiments provide an apparatus of processing a DOI in interaction information. The apparatus may include one or more computing devices. For example, in an implementation, the apparatus 400 may include one or more processors 402, an input/output (I/O) interface 404, a network interface 406 and memory 408 as shown in FIG. 4.

The memory 408 may include a form of computer readable media such as volatile memory, Random Access Memory (RAM), and/or non-volatile memory, e.g., Read-Only Memory (ROM) or flash RAM, etc. The memory 408 is an example of a computer readable media.

The computer readable media may include a permanent or non-permanent type, a removable or non-removable media, which may achieve storage of information using any method or technology. The information may include a computer-readable command, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

In an embodiment, the memory 408 may include program units 410 and program data 412. The program units 410 include an acquisition unit 414 to obtain a DOI from interaction information; an analysis unit 416 to analyze the DOI to obtain information identified by the DOI; and a push unit 418 to push the information identified by the DOI to a client end to cause the client end to display the information identified by the DOI in an information interactive interface.

In an implementation, the acquisition unit 414 obtaina the DOI in the interaction information that is sent by a sending client end.

In an implementation, the push unit 418 pushes interaction information that includes information identified by the DOI to the client end.

In an implementation, the acquisition unit 414 obtains image information from the interaction information, determines whether the image information includes the DOI, and extracts the DOI from the image information if affirmative.

In an implementation, the push unit 418 may push a display operation entry for the information identified by the DOI to the client end, and push the information identified by the DOI to the client end in response to receiving a display trigger instruction for the information identified by the DOI sent by the client end, where the display trigger instruction is triggered by a user operation on the display operation entry.

In an implementation, the push unit 418 pushes an operation entry for the information identified by the DOI to the client end. In the foregoing implementations, the interaction information may include interaction information in instant messaging, interaction information in a social networking platform, interaction information in an electronic mail, etc.

According to the technical solutions of the embodiments, a user is able to acquire information identified by a two-dimensional code in interaction information without performing tedious operations during information interaction. Thus, this solution greatly increases the user efficiency of obtaining the information that is identified by the two-dimensional code as compared to the existing technologies.

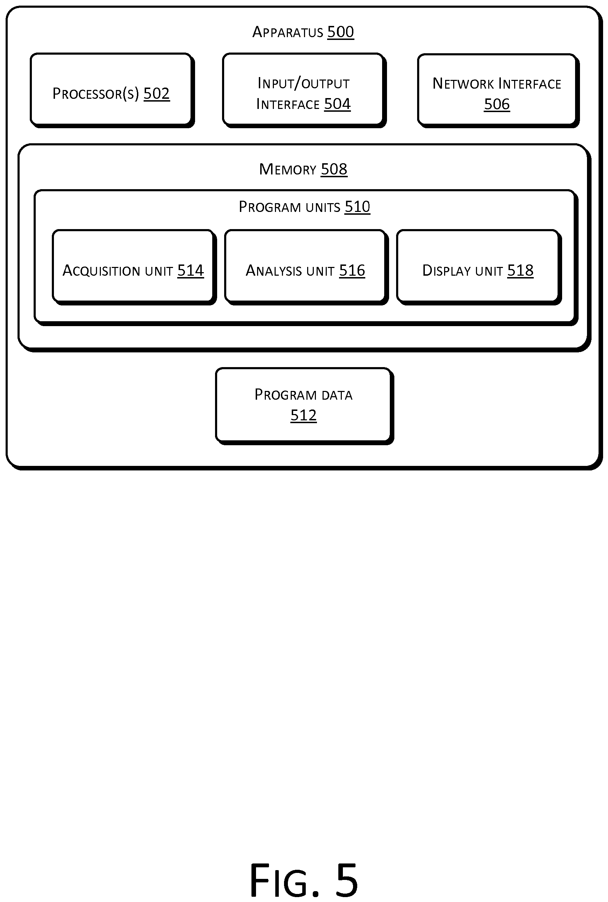

Based on the same inventive concepts, the embodiments provide another apparatus of processing a DOI in interaction information. The apparatus may include one or more computing devices. For example, in an implementation, the apparatus 500 may include one or more processors 502, an I/O interface 504, a network interface 506 and memory 508 as shown in FIG. 5. The memory 508 may include a form of computer readable media as described in the foregoing description.

In an implementation, the memory 508 may include program units 510 and program data 512. The program units 510 may include an acquisition unit 514 to obtain a DOI from interaction information; an analysis unit 516 to parse the DOI to obtain information identified by the DOI; and a display unit 518 configured to display the information identified by the DOI in an information interactive interface.

In an implementation, the acquisition unit 514 obtains image information from the interaction information, determines whether the image information includes the DOI, and extracts the DOI from the image information if affirmative.

In an implementation, the display unit 518 may push a display operation entry for the information identified by the DOI to the information interactive interface, and display the information identified by the DOI in the information interactive interface in response to receiving a display trigger instruction for the information identified by the DOI, where the display trigger instruction is triggered by a user operation on the display operation entry.

In an implementation, the display unit 518 may further display an operation entry for the information identified by the DOI in the information interactive interface. By the same token, a user is able to acquire information identified by a two-dimensional code in interaction information without performing tedious operations during information interaction. Thus, this solution greatly increases the user efficiency of obtaining the information that is identified by the two-dimensional code as compared to the existing technologies.

One skilled in the art should understand that the embodiments of the present disclosure can be provided as a method, a system or a product of a computer program. Therefore, the present disclosure can be implemented as an embodiment of hardware only, an embodiment of software only, or an embodiment of a combination of hardware and software. Moreover, the present disclosure can be implemented as a product of a computer program that can be stored in one or more computer readable storage media (which includes but is not limited to, a magnetic disk, a CD-ROM or an optical disk, etc.) that store computer-executable instructions.

The present disclosure is described in accordance with flowcharts and/or block diagrams of the exemplary methods, apparatuses (systems) and computer program products. It should be understood that each process and/or block and combinations of the processes and/or blocks of the flowcharts and/or the block diagrams may be implemented in the form of computer program instructions. Such computer program instructions may be provided to a general purpose computer, a special purpose computer, an embedded processor or another processing apparatus having a programmable data processing device to generate a machine, so that an apparatus having the functions indicated in one or more blocks described in one or more processes of the flowcharts and/or one or more blocks of the block diagrams may be implemented by executing the instructions by the computer or the other processing apparatus having programmable data processing device.

Such computer program instructions may also be stored in a computer readable memory device which may cause a computer or another programmable data processing apparatus to function in a specific manner, so that a manufacture including an instruction apparatus may be built based on the instructions stored in the computer readable memory device. That instruction device implements functions indicated by one or more processes of the flowcharts and/or one or more blocks of the block diagrams.

The computer program instructions may also be loaded into a computer or another programmable data processing apparatus, so that a series of operations may be executed by the computer or the other data processing apparatus to generate a computer implemented process. Therefore, the instructions executed by the computer or the other programmable apparatus may be used to implement one or more processes of the flowcharts and/or one or more blocks of the block diagrams.

It should also be noted that terms such as "comprise", "include" or any other variations thereof are meant to cover the non-exclusive inclusions. The process, method, product or apparatus that includes a series of elements not only includes those elements, but also includes other elements that are not explicitly listed, or further includes elements that already existed in such process, method, product or apparatus. In a condition without further limitations, an element defined by the phrase "include a/an ..." does not exclude any other similar elements from existing in the process, method, product or apparatus.

One skilled in the art should understand that the embodiments of the present disclosure can be provided as a method, a system or a computer program product. Therefore, the present disclosure can be implemented as an embodiment of only hardware, an embodiment of only software or an embodiment of a combination of hardware and software. Moreover, the present disclosure can be implemented as a computer program product that may be stored in one or more computer readable storage media (which includes but is not limited to, a magnetic disk, a CD-ROM or an optical disk, etc.) that store computer-executable instructions.

The above descriptions are merely exemplary embodiments of the present disclosure, and are not intended to limit the present disclosure. For one skilled in the art, the present disclosure may have various modifications and changes. The scope of the invention is defined only by the appended claims.

## Claims

1. A method of communication between a sending client end and a receiving client end implemented by a server, the method comprising:
obtaining (S11, S203) a digital object unique identifier, DOI, from interaction information received from the sending client end over a connection established between the server and the sending client end by verifying a login request of the sending client end, the DOI being in the received interaction information, wherein the obtaining (S11) the DOI from the interaction information comprises:
obtaining image information from the interaction information;
determining whether the image information includes the DOI; and
extracting the DOI from the image information in response to determining that the image information includes the DOI;
analyzing (S12) the DOI to obtain information identified by the DOI; and
pushing (S13, S207) the information identified by the DOI to the sending client end and to the receiving client end to cause each client end to display the information identified by the DOI in an information interactive interface.

2. The method of claim 1, wherein pushing (S13) the information identified by the DOI to the receiving client end comprises pushing new interaction information that includes the information identified by the DOI to the receiving client end.

3. The method of any preceding claim, wherein pushing (S13) the information identified by the DOI to the receiving client end comprises:
pushing a display operation entry for the information identified by the DOI to the receiving client end; and
pushing the information identified by the DOI to the receiving client end in response to receiving a display trigger instruction for the information identified by the DOI from the receiving client end, wherein the display trigger instruction is triggered by a user operation on the display operation entry.

4. The method of any preceding claim, wherein the interaction information received from the sending client end comprises interaction information in instant messaging, interaction information in a social networking platform or interaction information in an electronic mail.

5. The method of any preceding claim, wherein the DOI comprises a two-dimensional code, a bar code, a character code or a network domain name.

6. One or more computer-readable media storing executable instructions that, when executed by one or more processors (402, 502) of a server (400, 500), cause the one or more processors (402, 502) to perform acts comprising:
obtaining (S11, S203) a digital object unique identifier, DOI, from interaction information received from a sending client end over a connection established between the server and the sending client end by verifying a login request of the sending client end, the DOI being in the interaction information wherein obtaining (S11) the DOI from the interaction information comprises:
obtaining image information from the interaction information;
determining whether the image information includes the DOI; and
extracting the DOI from the image information in response to determining that the image information includes the DOI;
analyzing (S12) the DOI to obtain information identified by the DOI; and
pushing (S13, S207) the information identified by the DOI to the sending client end and to a receiving client end to cause each client end to display the information identified by the DOI in an information interactive interface.

7. The one or more computer-readable media of claim 6, wherein pushing (S13) the information identified by the DOI to the receiving client end includes pushing new interaction information that includes the information identified by the DOI to the receiving client end.

8. The one or more computer-readable media of claim 6 or claim 7, wherein pushing (S13) the information identified by the DOI to the receiving client end comprises:
pushing a display operation entry for the information identified by the DOI to the receiving client end; and
pushing the information identified by the DOI to the receiving client end in response to receiving a display trigger instruction for the information identified by the DOI from the receiving client end, wherein the display trigger instruction is triggered by a user operation on the display operation entry.

9. The one or more computer-readable media of any one of claims 6 to 8, wherein the interaction information received from the sending client end comprises interaction information in instant messaging, interaction information in a social networking platform or interaction information in an electronic mail.

10. A server (400) comprising:
one or more processors (402);
memory (408);
an acquisition unit (414) stored in the memory (408) and executable by the one or more processors (402) to obtain a digital object unique identifier, DOI, from interaction information received from the sending client end over a connection established between the server and the sending client end by verifying a login request of the sending client end, the DOI being in the received interaction information, wherein the acquisition unit (414) is configured to obtain image information from the interaction information, determine whether the image information includes the DOI, and extract the DOI from the image information in response to determining that the image information includes the DOI;
an analysis unit (416) stored in the memory (408) and executable by the one or more processors (402) to parse the DOI to obtain information identified by the DOI; and
a push unit (418) stored in the memory (408) and executable by the one or more processors (402) to push the information identified by the DOI to the sending client end and to a receiving client end to cause each client end to display the information identified by the DOI in an information interactive interface.

11. The server (400) of claim 10, wherein the push unit (418) is configured to push a display operation entry for the information identified by the DOI to the information interactive interface of the receiving client end; and to perform the pushing the information identified by the DOI in response to receiving a display trigger instruction for the information identified by the DOI, wherein the display trigger instruction is arranged to be triggered by a user operation on the display operation entry at the receiving client end.

## Patentansprüche

1. Kommunikationsverfahren zwischen einem sendenden Client-Ende und einem empfangenden Client-Ende, das durch einen Server implementiert wird, das Verfahren umfassend:
Erhalten (S11, S203) einer digitalen eindeutigen Objektkennung (digital object unique identifier - DOI) von Interaktionsinformationen, die von dem sendenden Client-Ende über eine Verbindung, die zwischen dem Server und dem sendenden Client-Ende durch Überprüfen einer Anmeldeanforderung des sendenden Client-Endes aufgebaut wird, empfangen werden, wobei die DOI in den empfangenen Interaktionsinformationen ist, wobei das Erhalten (S11) der DOI von den Interaktionsinformationen umfasst:
Erhalten von Bildinformationen von den Interaktionsinformationen;
Bestimmen, ob die Bildinformationen die DOI beinhalten; und
Extrahieren der DOI von den Bildinformationen als Reaktion auf das Bestimmen, dass die Bildinformationen die DOI beinhalten;
Analysieren (S12) der DOI, um Informationen, die durch die DOI identifiziert werden, zu erhalten; und
Pushen (S13, S207) der Informationen, die durch die DOI identifiziert werden, an das sendende Client-Ende und an das empfangende Client-Ende, um jedes Client-Ende zu veranlassen, die Informationen, die durch die DOI identifiziert werden, in einer interaktiven Informationsschnittstelle anzuzeigen.

2. Verfahren nach Anspruch 1, wobei das Pushen (S13) der Informationen, die durch die DOI identifiziert werden, an das empfangende Client-Ende das Pushen neuer Interaktionsinformationen, die Informationen, die durch die DOI identifiziert werden, beinhalten, an das empfangende Client-Ende umfasst.

3. Verfahren nach einem der vorstehenden Ansprüche, wobei das Pushen (S13) der Informationen, die durch die DOI identifiziert werden, an das empfangende Client-Ende umfasst:
Pushen eines Anzeigeoperationseintrags für die Informationen, die durch die DOI identifiziert werden, an das empfangende Client-Ende; und
Pushen der Informationen, die durch die DOI identifiziert werden, an das empfangende Client-Ende als Reaktion auf ein Empfangen einer Anzeigeauslöseanweisung für die Informationen, die durch die DOI identifiziert werden, von dem empfangenden Client-Ende, wobei die Anzeigeauslöseanweisung durch eine Benutzeroperation an dem Anzeigeoperationseintrag ausgelöst wird.

4. Verfahren nach einem der vorstehenden Ansprüche, wobei die Interaktionsinformationen, die von dem sendenden Client-Ende empfangen werden, Interaktionsinformationen in Instant Messaging, Interaktionsinformationen in einer sozialen Netzwerkplattform oder Interaktionsinformationen in einer elektronischen Post umfassen.

5. Verfahren nach einem der vorstehenden Ansprüche, wobei die DOI einen zweidimensionalen Code, einen Strichcode, einen Zeichencode oder einen Netzwerkdomänennamen umfasst.

6. Ein oder mehrere computerlesbare Medien, die ausführbare Anweisungen hinterlegen, die, wenn sie durch einen oder mehrere Prozessoren (402, 502) eines Servers (400, 500) ausgeführt werden, den einen oder die mehreren Prozessoren (402, 502) veranlassen, Handlungen durchzuführen, umfassend:
Erhalten (S11, S203) einer digitalen eindeutigen Objektkennung (DOI) von Interaktionsinformationen, die von einem sendenden Client-Ende über eine Verbindung, die zwischen dem Server und dem sendenden Client-Ende durch Überprüfen einer Anmeldeanforderung des sendenden Client-Endes aufgebaut wird, empfangen werden, wobei die DOI in den Interaktionsinformationen ist, wobei das Erhalten (S11) der DOI von den Interaktionsinformationen umfasst:
Erhalten von Bildinformationen von den Interaktionsinformationen;
Bestimmen, ob die Bildinformationen die DOI beinhalten; und
Extrahieren der DOI von den Bildinformationen als Reaktion auf das Bestimmen, dass die Bildinformationen die DOI beinhalten;
Analysieren (S12) der DOI, um Informationen, die durch die DOI identifiziert werden, zu erhalten; und
Pushen (S13, S207) der Informationen, die durch die DOI identifiziert werden, an das sendende Client-Ende und an ein empfangendes Client-Ende, um jedes Client-Ende zu veranlassen, die Informationen, die durch die DOI identifiziert werden, in einer interaktiven Informationsschnittstelle anzuzeigen.

7. Ein oder mehrere computerlesbare Medien nach Anspruch 6, wobei das Pushen (S13) der Informationen, die durch die DOI identifiziert werden, an das empfangende Client-Ende das Pushen neuer Interaktionsinformationen, die die Informationen, die durch die DOI identifiziert werden, beinhalten, an das empfangende Client-Ende beinhaltet.

8. Ein oder mehrere computerlesbare Medien nach Anspruch 6 oder 7, wobei das Pushen (S13) der Informationen, die durch die DOI identifiziert werden, an das empfangende Client-Ende umfasst:
Pushen eines Anzeigeoperationseintrags für die Informationen, die durch die DOI identifiziert werden, an das empfangende Client-Ende; und
Pushen der Informationen, die durch die DOI identifiziert werden, an das empfangende Client-Ende als Reaktion auf ein Empfangen einer Anzeigeauslöseanweisung für die Informationen, die durch die DOI identifiziert werden, von dem empfangenden Client-Ende, wobei die Anzeigeauslöseanweisung durch eine Benutzeroperation an dem Anzeigeoperationseintrag ausgelöst wird.

9. Ein oder mehrere computerlesbare Medien nach einem der Ansprüche 6 bis 8, wobei die Interaktionsinformationen, die von der sendenden Client-Seite empfangen werden, Interaktionsinformationen in Instant Messaging, Interaktionsinformationen in einer sozialen Netzwerkplattform oder Interaktionsinformationen in einer elektronischen Post umfassen.

10. Server (400), umfassend:
einen oder mehrere Prozessoren (402);
einen Speicher (408);
eine Erfassungseinheit (414), die in dem Speicher (408) hinterlegt ist und durch den einen oder die mehreren Prozessoren (402) ausführbar ist, um eine digitale eindeutige Objektkennung (DOI) von Interaktionsinformationen, die von dem sendenden Client-Ende über eine Verbindung, die zwischen dem Server und dem sendenden Client-Ende durch Überprüfen einer Anmeldeanforderung des sendenden Client-Endes aufgebaut wird, empfangen werden, wobei die DOI in den empfangenen Interaktionsinformationen ist, wobei die Erfassungseinheit (414) konfiguriert ist, um Bildinformationen von den Interaktionsinformationen zu erhalten, zu bestimmen, ob die Bildinformationen die DOI beinhalten, und die DOI von den Bildinformationen als Reaktion auf das Bestimmen, dass die Bildinformationen die DOI beinhalten, zu extrahieren;
eine Analyseeinheit (416), die in dem Speicher (408) hinterlegt ist und durch den einen oder die mehreren Prozessoren (402) ausführbar ist, um die DOI zu parsen, um Informationen, die durch die DOI identifiziert werden, zu erhalten; und
eine Push-Einheit (418), die in dem Speicher (408) hinterlegt ist und durch den einen oder die mehreren Prozessoren (402) ausführbar ist, um die Informationen, die durch die DOI identifiziert werden, an das sendende Client-Ende und an ein empfangendes Client-Ende zu pushen, um jedes Client-Ende zu veranlassen, die Informationen, die durch die DOI identifiziert werden, in einer interaktiven Informationsschnittstelle anzuzeigen.

11. Server (400) nach Anspruch 10, wobei die Push-Einheit (418) konfiguriert ist, um einen Anzeigeoperationseintrag für die Informationen, die durch die DOI identifiziert werden, an die interaktive Informationsschnittstelle des empfangenden Client-Endes zu pushen; und das Pushen der Informationen, die durch die DOI identifiziert werden, als Reaktion auf das Empfangen einer Anzeigeauslöseanweisung für die Informationen, die durch die DOI identifiziert werden, durchzuführen, wobei die Anzeigeauslöseanweisung angeordnet ist, um durch eine Benutzeroperation an dem Anzeigeoperationseintrag an dem empfangenden Client-Ende ausgelöst zu werden.

## Revendications

1. Procédé de communication entre une extrémité client émettrice et une extrémité client réceptrice mis en œuvre par un serveur, le procédé comprenant :
l'obtention (S11, S203) d'un identificateur unique d'objets numériques, DOI, à partir d'informations d'interaction reçues à partir de l'extrémité client émettrice sur une connexion établie entre le serveur et l'extrémité client émettrice en vérifiant une demande de connexion de l'extrémité client émettrice, le DOI étant dans les informations d'interaction reçues, l'obtention (S11) du DOI à partir des informations d'interaction comprenant :
l'obtention d'informations d'image à partir des informations d'interaction ;
la détermination du fait que les informations d'image comportent le DOI ; et
l'extraction du DOI à partir des informations d'image en réponse à la
détermination du fait que les informations d'image comportent le DOI ;
l'analyse (S12) du DOI pour obtenir des informations identifiées par le DOI ; et
le pousser (S13, S207) des informations identifiées par le DOI vers l'extrémité client émettrice et vers l'extrémité client réceptrice pour amener chaque extrémité client à afficher les informations identifiées par le DOI dans une interface interactive d'informations.

2. Procédé selon la revendication 1, dans lequel le pousser (S13) des informations identifiées par le DOI vers l'extrémité client réceptrice comprend le pousser de nouvelles informations d'interaction qui comportent les informations identifiées par le DOI vers l'extrémité client réceptrice.

3. Procédé selon l'une quelconque des revendications précédentes, dans lequel le pousser (S13) des informations identifiées par le DOI vers l'extrémité client réceptrice comprend :
le pousser d'une entrée d'opération d'affichage pour les informations identifiées par le DOI vers l'extrémité client réceptrice ; et
le pousser des informations identifiées par le DOI vers l'extrémité client réceptrice en réponse à la réception d'une instruction de déclenchement d'affichage pour les informations identifiées par le DOI à partir de l'extrémité client réceptrice, l'instruction de déclenchement d'affichage étant déclenchée par une opération utilisateur sur l'entrée d'opération d'affichage.

4. Procédé selon l'une quelconque des revendications précédentes, dans lequel les informations d'interaction reçues à partir de l'extrémité client émettrice comprennent des informations d'interaction dans une messagerie instantanée, des informations d'interaction dans une plateforme de réseau social ou des informations d'interaction dans un courrier électronique.

5. Procédé selon l'une quelconque des revendications précédentes, dans lequel le DOI comprend un code bidimensionnel, un code à barres, un code de caractère ou un nom de domaine réseau.

6. Un ou plusieurs supports lisibles par ordinateur stockant des instructions exécutables qui, lorsqu'elles sont exécutées par un ou plusieurs processeurs (402, 502) d'un serveur (400, 500), amènent le ou les processeurs (402, 502) à effectuer des actes comprenant :
l'obtention (S11, S203) d'un identificateur unique d'objet numérique, DOI, à partir d'informations d'interaction reçues à partir d'une extrémité client émettrice sur une connexion établie entre le serveur et l'extrémité client émettrice en vérifiant une requête de connexion de l'extrémité client émettrice, le DOI étant dans les informations d'interaction, l'obtention (S11) du DOI à partir des informations d'interaction comprenant :
l'obtention d'informations d'image à partir des informations d'interaction ;
la détermination du fait que les informations d'image comportent le DOI ; et
l'extraction du DOI à partir des informations d'image en réponse à la
détermination du fait que les informations d'image comportent le DOI ;
l'analyse (S12) du DOI pour obtenir des informations identifiées par le DOI ; et
le pousser (S13, S207) des informations identifiées par le DOI vers l'extrémité client émettrice et vers une extrémité client réceptrice pour amener chaque extrémité client à afficher les informations identifiées par le DOI dans une interface interactive d'informations.

7. Un ou plusieurs supports lisibles par ordinateur selon la revendication 6, dans lequel le pousser (S13) des informations identifiées par le DOI vers l'extrémité client réceptrice comporte le pousser de nouvelles informations d'interaction qui comportent les informations identifiées par le DOI vers l'extrémité client réceptrice.

8. Un ou plusieurs supports lisibles par ordinateur selon la revendication 6 ou la revendication 7, dans lequel le pousser (S13) des informations identifiées par le DOI vers l'extrémité client réceptrice comprend :
le pousser d'une entrée d'opération d'affichage pour les informations identifiées par le DOI vers l'extrémité client réceptrice ; et
le pousser des informations identifiées par le DOI vers l'extrémité client réceptrice en réponse à la réception d'une instruction de déclenchement d'affichage pour les informations identifiées par le DOI à partir de l'extrémité client réceptrice, l'instruction de déclenchement d'affichage étant déclenchée par une opération utilisateur sur l'entrée d'opération d'affichage.

9. Un ou plusieurs supports lisibles par ordinateur selon l'une quelconque des revendications 6 à 8, dans lequel les informations d'interaction reçues de l'extrémité client émettrice comprennent des informations d'interaction dans une messagerie instantanée, des informations d'interaction dans une plateforme de réseau social ou des informations d'interaction dans un courrier électronique.

10. Un serveur (400) comprenant :
un ou plusieurs processeurs (402) ;
une mémoire (408) ;
une unité d'acquisition (414) stockée dans la mémoire (408) et exécutable par le ou les processeurs (402) pour obtenir un identificateur unique d'objet numérique, DOI, à partir d'informations d'interaction reçues de l'extrémité client émettrice sur une connexion établie entre le serveur et l'extrémité client émettrice en vérifiant une requête de connexion de l'extrémité client émettrice, le DOI étant dans les informations d'interaction reçues, l'unité d'acquisition (414) étant configurée pour obtenir des informations d'image à partir des informations d'interaction, déterminer si les informations d'image comportent le DOI, et extraire le DOI à partir des informations d'image en réponse à la détermination du fait que les informations d'image comportent le DOI ;
une unité d'analyse (416) stockée dans la mémoire (408) et exécutable par le ou les processeurs (402) pour analyser le DOI afin d'obtenir des informations identifiées par le DOI; et
une unité de poussée (418) stockée dans la mémoire (408) et exécutable par le ou les processeurs (402) pour pousser les informations identifiées par le DOI vers l'extrémité client émettrice et vers une extrémité client réceptrice pour amener chaque extrémité client à afficher les informations identifiées par le DOI dans une interface d'informations interactive.

11. Serveur (400) selon la revendication 10, dans lequel l'unité de poussée (418) est configurée pour pousser une entrée d'opération d'affichage pour les informations identifiées par le DOI vers l'interface d'informations interactive de l'extrémité client réceptrice ; et pour réaliser le pousser des informations identifiées par le DOI en réponse à la réception d'une instruction de déclenchement d'affichage pour les informations identifiées par le DOI, l'instruction de déclenchement d'affichage étant agencée pour être déclenchée par une opération utilisateur sur l'entrée d'opération d'affichage au niveau de l'extrémité client réceptrice.
